# EUROPEAN PATENT APPLICATION

(11) **EP 0 537 748 A2**
(43) Date of publication of application: **21.04.1993**
(21) Application number: 92117644.2
(22) Date of filing: 15.10.1992
(51) Int. Cl.: B23B 31/32

(54) **Device for clamping workpiece**

(30) Priority: 16.10.1991 JP 267648/91
(71) Applicant: Ishii, Masato, Ikoma-shi, Nara (JP); Ohta, Yoshiyuki, Ikoma-shi, Nara (JP)
(72) Inventor: Ishii, Masato, Ikoma-shi, Nara (JP); Ohta, Yoshiyuki, Ikoma-shi, Nara (JP)
(74) Representative: Glawe, Delfs, Moll & Partner

(57) **Abstract**

A device for clamping a work has a base body (2) rotatable together with a spindle (1) of a machine tool and provided with a hollow space (3). A piston (4) is mounted in the hollow space so as to be movable back and forth by the influence of fluid supplied through passages. A diaphragm (11) is provided on a front side of the base body (2) with a predetermined gap left therebetween. It has its peripheral portion secured to said base portion and its central part in engagement with the piston (4). A plurality of clamping jaws (21,22) are provided on the front surface of the diaphragm.

## Description

This invention relates to a device for supporting a workpiece to be machined.

Unexamined Japanese Patent Publication 2-269513 discloses a method of clamping a workpiece to be machined, in which the work clamping jaws are opened by feeding compressed air into a passage or branched passages through an outer sheath of an air tube or through the air tube and the jaws are closed to clamp the work by stopping the supply of compressed air or by reducing its pressure after fitting an inner recessed part of the work onto a work stopper (outer clamping method).

In another method, an inner protrusion of the work is brought into abutment with the work stopper and the work clamping jaws are engaged in recesses formed inside. Then by feeding compressed air into the passage or branched passages, the work clamping jaws are opened, thus clamping the work (inner clamping method).

The outer clamping method, in which the work is clamped using the restoring force of the diaphragm, has a problem in that the work clamping jaws tend to shift outward due to the centrifugal force produced while in rotation in proportion to the mass of the clamping jaws. This reduces the clamping force. Thus with this method, it was difficult to increase the revolving speed of the work while maintaining safety in operation.

Further, since the outer clamping force of the clamping jaws cannot be reduced below a certain level due to the fact that they are controlled by the restoring force of the diaphragm, the work may be deformed if it is too thin. Thus, it was impossible to machine thin works.

With the inner clamping method, when the work clamping jaws are opened and pressed against the inner surface of the work by feeding compressed air, centrifugal force is produced in proportion to the mass of the clamping jaw while in rotation. Thus, the clamping jaws are pressed more strongly against the work. Thus the work is pushed outward and may be deformed. It was thus impossible to machine a thin work.

Further, in case of the inner clamping method, if the air compressor or the air tube should be broken, the clamping force will disappear and an accident may result.

An object of this invention is to provide a work supporting device which can rotate a work at high speed, which can clamp a thin work, which can clamp a work either from outside or from inside without being affected by the centrifugal force produced in proportion to the mass of the clamping jaws, and which can clamp a work with the combined force of the diaphragm and the piston.

According to the present invention, there is provided a device for supporting a work comprising a base body rotatable together with a spindle of a machine tool and provided with a hollow space, a piston mounted in the hollow space and movable back and force by changing over the flow of fluid supplied through passages, a diaphragm provided on a front side of the base body with a predetermined gap left therebetween and having its peripheral portion secured to the piston and its central part in engagement with the piston, and a plurality of clamping jaws provided on the front surface of the diaphragm.

When clamping from outside, pressurized fluid is fed through the passage to the backside of the piston in the hollow space to slide the piston. As the piston slides, the central part of the diaphragm is pushed forward, thereby spreading open the clamping jaws.

Then, after inserting a work, the supply of pressurized fluid is stopped to push back the piston with the restoring force of the diaphragm. The clamping jaws thus shrink so that the work is clamped by the jaws.

Further, when fluid is supplied through the passage to the front side of the piston in the hollow space in order to offset the influence of the centrifugal force and to increase the clamping force, the piston slides rearward while drawing the central part of the diaphragm rearward. Thus, the clamping jaws shrink.

Then, after inserting a work, the supply of pressurized fluid is stopped to push back the piston with the restoring force of the diaphragm. The clamping jaws are thus opened so that the work is clamped by the jaws.

Further, when fluid is supplied through the passage to the backside of the piston in the hollow space in order to offset the influence of the centrifugal force and to increase the clamping force, the piston slides forward while pushing the central part of the diaphragm forward. Thus, the clamping jaws are opened and the work fitted on the outside of the clamping jaws are clamped.

As described above, according to this invention, since fluid pressure is always applied to one end of piston while clamping the work, the clamping jaws are prevented from shifting outward under the influence of centrifugal force while in rotation. Thus, the work can be machined with utmost safety and can be rotated at high speed.

Also, by adjusting the fluid pressure, a thin work can be clamped without deforming it.

A large clamping force can be applied because this force is produced both by the diaphragm and the piston.

Other features and objects of the present invention will become apparent from the following description taken with reference to the accompanying drawings, in which:
Fig. 1 is a vertical sectional side view of the first embodiment according to this invention;

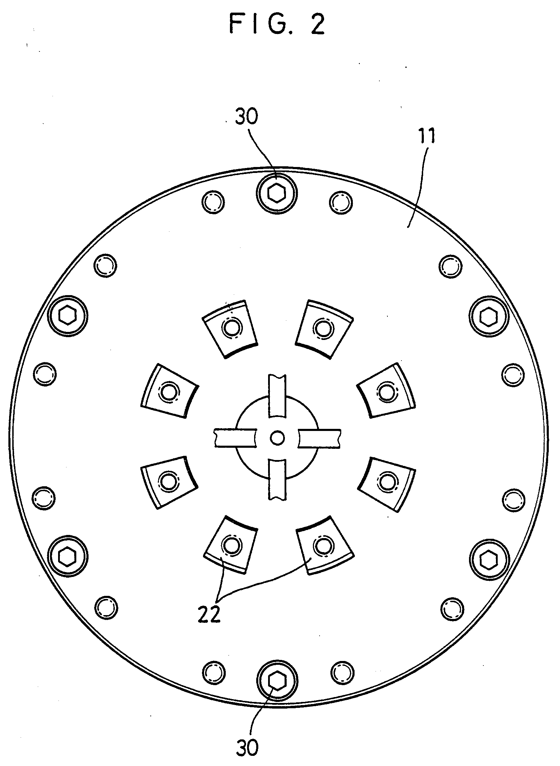

Fig. 2 is a front view of the same;
Fig. 3 is a vertical sectional side view of the second embodiment;
Fig. 4 is a front view of the same;
Fig. 5 is a vertical sectional side view of the third embodiment;

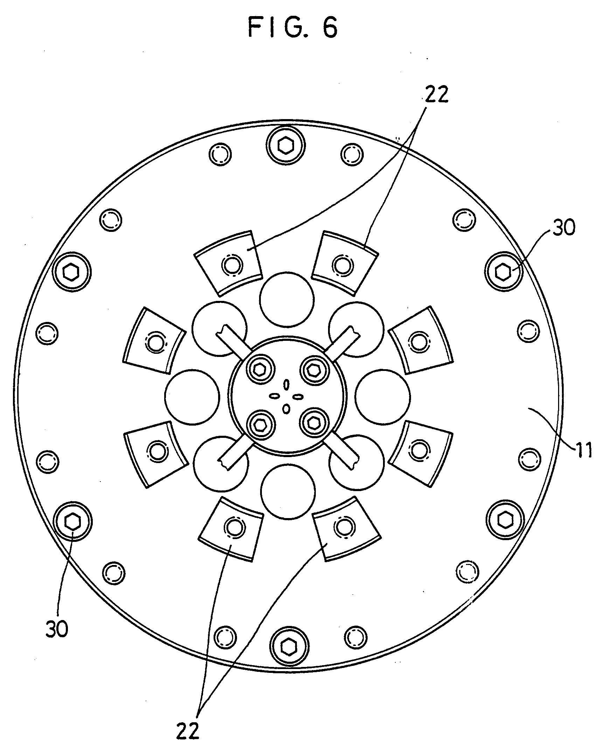

Fig. 6 is a front view of the same;
Fig. 7 is a partially cutaway side view showing a work in a clamped state; and
Fig. 8 is a partially cutaway side view showing a work in another clamped state.

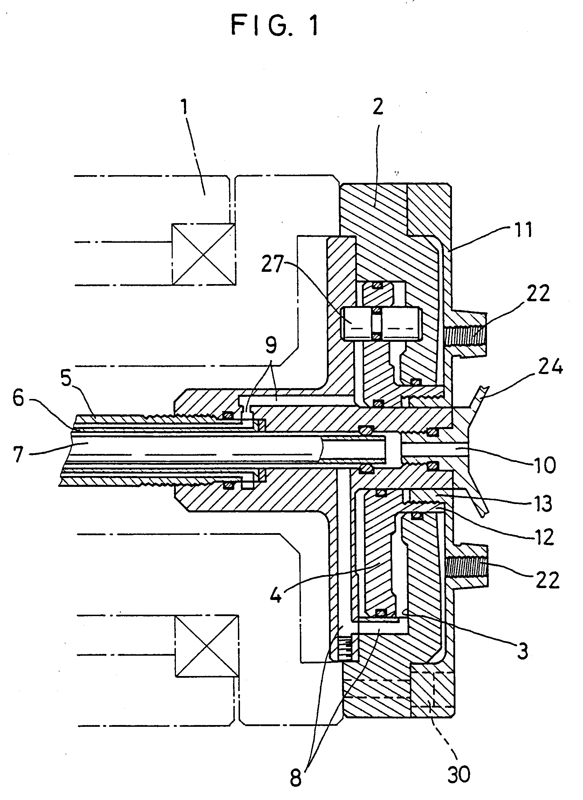

As shown in Figs. 1, 3 and 5, a base body 2 is adapted to rotate together with a spindle 1 of a machine tool and has a hollow space 3.

In the hollow space 3 is mounted a piston 4 so as to be movable back and forth by changing over the flow of fluid supplied.

The device comprises a large-diameter outer pipe 5 adapted to rotate together with the base body 2, a small-diameter inner pipe 6 provided inside the outer pipe 5, with a gap left therebetween, and a coolant liquid supply tube 7 inserted in the inner pipe 6, with a gap left therebetween.

In the embodiment of Fig. 1, a first passage 8 is provided having one end communicating with the gap between the tube 7 and the inner pipe 6 and the other end communicating with the front side of the piston 4 mounted in the hollow space 3. A second passage 9 communicates at one end with the gap between the outer pipe 5 and the inner pipe 6 and at the other end with the back side of the piston 4.

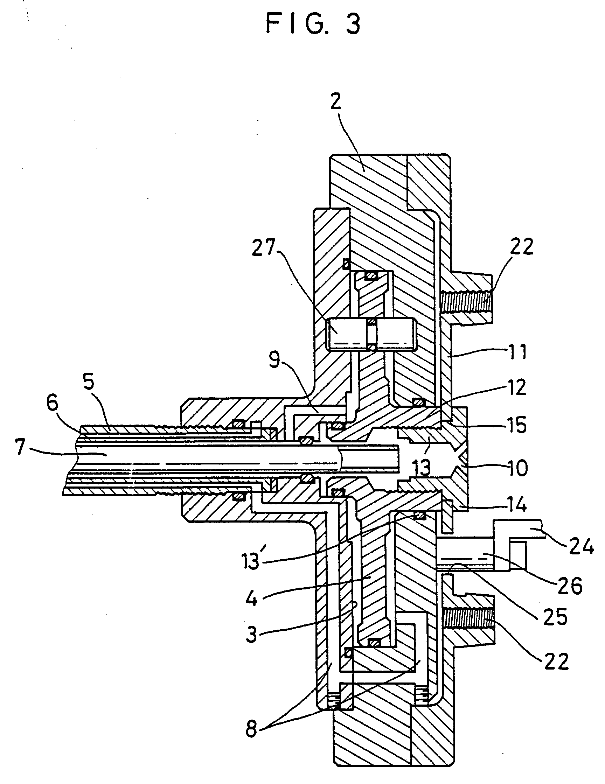

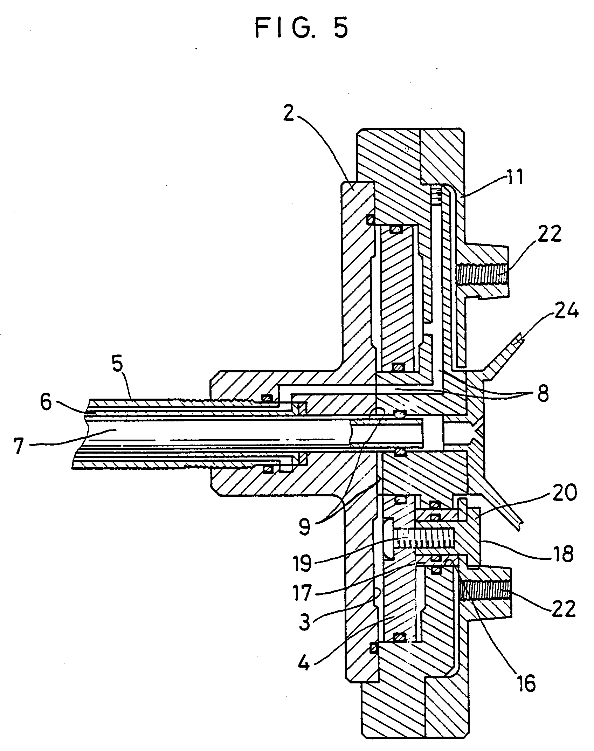

In the embodiments of Figs. 3 and 5, a first passage 8 is provided having one end communicating with the gap between the outer pipe 5 and the inner pipe 6 and the other end communicating with the first side of the piston 4 mounted in the hollow space 3. A second passage 9 communicates at one end with the gap between the inner pipe 6 and the tube 7 and at the other end with the back side of the piston 4.

In order to allow the outer pipe 5, inner pipe 6 and tube 7 to rotate together with the base body 2, their movable sides are connected to their fixed sides through a rotary joint (not shown).

The hollow space 3 is annularly shaped in order to spray the coolant liquid supplied from the tube 7 through a nozzle 10 over the work A. For the same purpose, the piston 4 is also annularly shaped.

A diaphragm 11 is provided at the side of the front surface of the base body 2 with a predetermined gap defined therebetween and has its outer edge secured to the peripheral edge of the base body 2 by tools 30 such as bolts. The diaphragm 11 has its central portion kept in engagement with the central portion of the piston 4.

The diaphragm 11 has to have a sufficiently large tensile strength and is formed e.g. by subjecting a deposition-hardened alloy to solution treatment, machining it and then subjecting the material machined to heat treatment for age hardening until its hardness reaches a predetermined value.

In order to engage the piston 4 and the diaphragm 11 together, as shown in Figs. 1 and 3, a rearwardly protruding cylindrical portion 13 as a leakage preventive means may be provided on the central part of the diaphragm 11 so as to threadedly engage a forwardly protruding cylindrical portion 12 provided on the central part of the piston 4. Also, as shown in Fig. 3, the nozzle 10 may be screwed into the cylindrical portion 12 of the piston 4 to sandwich the edge of a central edge 15 of the diaphragm 11 between a flange 14 of the nozzle 10 and the end face of the cylindrical portion 12.

Otherwise, as shown in Fig. 5, a collar 17 and a box nut 18 fitted in the collar 17, both provided with leakage preventive means, may be slidably inserted in each of a plurality of holes 16. Screws 19 are tightened into the box nuts 18 to fix the box nuts 18 to the piston 4. The diaphragm 11 is sandwiched between the end faces of the collars 17 and heads 20 of the box nuts 18.

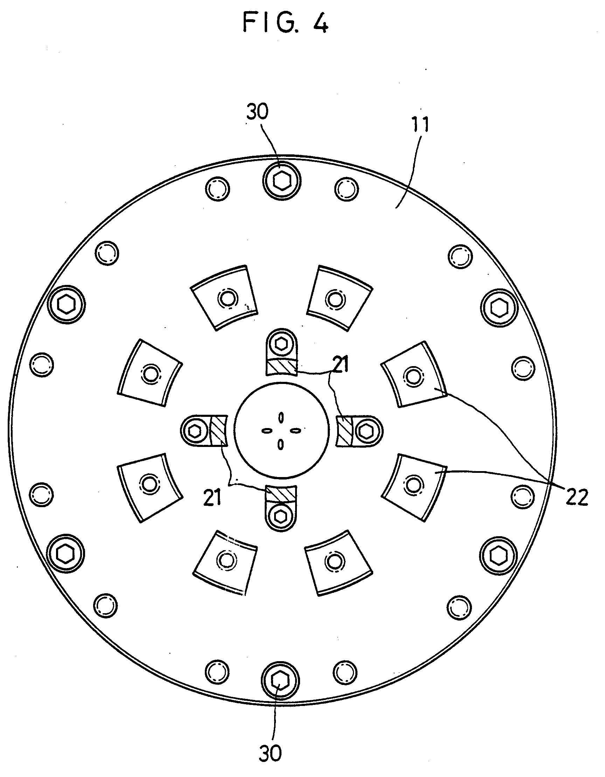

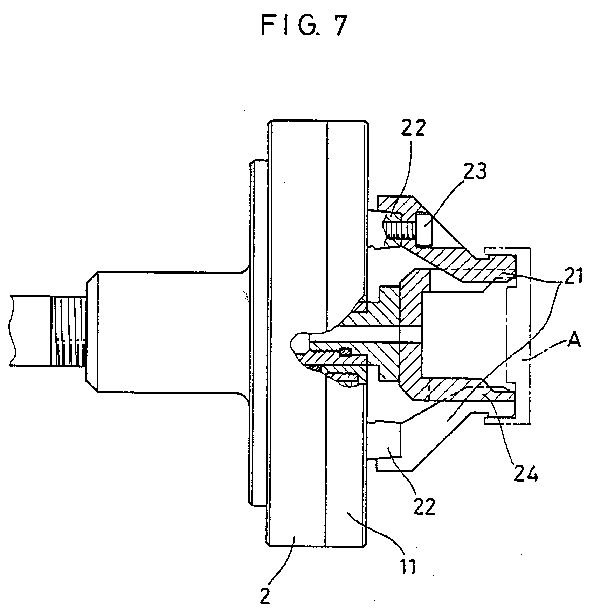

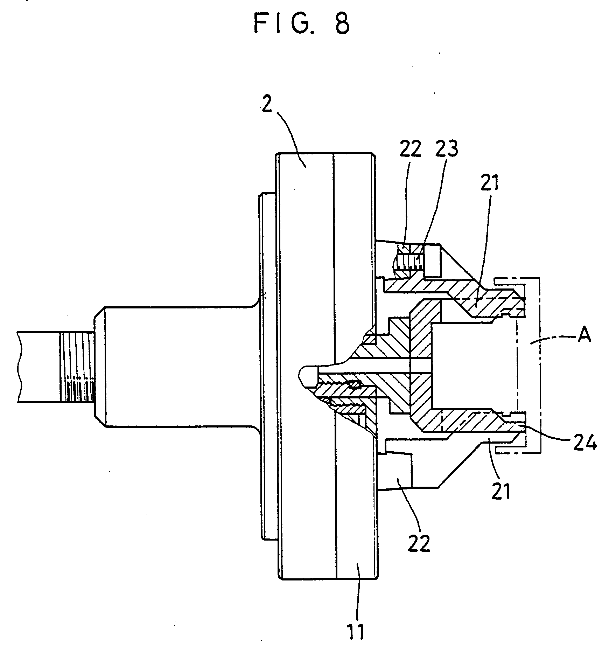

Jaws 21 for clamping the work A are arranged on the front side of the diaphragm 11. (Fig. 7 and 8) As shown in Figs. 4, 7 and 8, work clamping jaws 21 are arranged radially in a great number, they are secured to threaded sheaths 22 integrally provided on the front surface of the diaphragm 11 by means of bolts 23. There are two kinds of work clamping jaws. Those shown in Fig. 7 are of a type that clamps the work from inside while those shown in Fig. 8 are of a type that clamps the work from outside.

In the figures, numeral 24 designates a stopper for positioning the work A. The stoppers 24 may be provided to protrude from the nozzle 10 (as shown in Figs. 1 and 5) or may be provided on leg members 26 that extend through windows 25 formed in the diaphragm 11 and fixed to the base body 2 (as shown in Fig. 3). A guide pin 27 is provided to prevent the rotation of the piston 4 and to guide the forward and backward movement of the piston 4.

With this arrangement, when fluid (air) is fed under pressure through the first passage 8 to the front side of the piston 4 in the hollow space 3, the piston 4 slides in such a direction as to pull the central part of the diaphragm 11 rearwardly. As a result, the clamping jaws 21 will close or incline radially inwardly together with the threaded sheaths 22 integral with the diaphragm 11.

In this state, as shown in Fig. 7, the work A is placed on the stoppers 24 so as to be set in a predetermined position, with the clamping jaws 21 located inside the inner peripheral wall of the work A and kept out of engagement therewith.

Then, by stopping the supply of compressed fluid to the front side of the piston 4, the piston is allowed to move back to its original position by the restoring force of the diaphragm 11, so that the jaws 21 are spread open until they are pressed against the inner peripheral wall of the work A. Thus, the work A is clamped in position.

In order to increase the clamping force with the jaws 21, fluid under pressure is fed through the second passage 9 to the back side of the piston 4 in the hollow space 3. Namely, by feeding the pressurized fluid to the back of the piston 4, the piston 4 slides further forward, pushing out the central part of the diaphragm 11. Thus, the jaws 21 are pressed harder against the inner peripheral wall of the work A.

Fig. 8 shows the clamping jaws for clamping the work from outside. In this case, the piston 4 in the hollow space 3 is initially moved forward by feeding pressurized fluid to the backside of the piston 4 through the second passage 9. The central part of the diaphragm 11 is pushed out forward so that the jaw 21 are spread open.

Then, as shown in Fig. 8, the work is supported on the stoppers 24 to hold the work A in a predetermined position. When the supply of pressurized fluid is stopped in this state, the piston 4 will move back to its original position by the restoring force of the diaphragm 11. The jaws 21 will shrink (incline radially inward) and be pressed against an annular rib formed on the peripheral wall of the work A at a portion surrounded by its annular flange, thereby clamping the work A in position.

In order to offset the influence of the centrifugal force and to increase the clamping force, fluid under pressure is fed through the first passage 8 to the front side of the piston 4 in the hollow space 3. Namely, by feeding the pressurized fluid, the piston 4 slides rearwardly while pulling the central part of the diaphragm 11. Thus, the jaws 21 are pressed harder against the work.

The work may be clamped at any other part.

## Claims

1. A device for clamping a work comprising a base body rotatable together with a spindle of a machine tool and provided with a hollow space, a piston mounted in said hollow space so as to be movable back and force by changing the flow of fluid supplied to said hollow space behind and in front of said piston, a diaphragm provided on a front side of said base body with a predetermined gap left therebetween and having its peripheral portion secured to said base body and its central part in engagement with said piston, and a plurality of clamping jaws provided on the front surface of said diaphragm.
